# EUROPÄISCHE PATENTANMELDUNG

(11) **EP 4 733 036 A1**
(43) Veröffentlichungstag der Anmeldung: **29.04.2026**
(21) Anmeldenummer: 24208141.2
(22) Anmeldetag: 22.10.2024
(51) Int. Cl.: B29C 48/00, B29C 44/00, B29C 48/07, B29C 48/35

(54) **STRUKTURPLATTE, EXTRUSIONSVORRICHTUNG UND HERSTELLUNGSVERFAHREN**

(71) Anmelder: Airex AG, 5643 Sins (CH)
(72) Erfinder: NÜSSLI, Matthias, 6033 Buchrain (CH); RAKUTT, Dietmar, Cham (CH); HOLLMANN, Christoph, 78269 Volkertshausen (DE)
(74) Vertreter: Patent- und Rechtsanwälte Behrmann Wagner PartG mbB

(57) **Zusammenfassung**

Strukturplatte (10), insbesondere eine formstabile Schaumplatte für bedruckte Werbeanzeigen, die aus einem thermoplastischen Kunststoff (25), insbesondere PET gebildet ist. Dabei ist die Strukturplatte (10) unmittelbar durch Extrusion eines Kunststoffs (25) durch eine Extrusionsdüse (16), insbesondere eine Breitschlitzdüse, und ein anschließendes Aufschäumen geformt, wobei die unmittelbar extrudierte Strukturplatte (10) in einer Außenoberfläche (14) zumindest einer Flächenseite (12) derart zumindest teilweise geschlossene Poren und/oder eine derart geringe Porentiefe aufweist, dass eine homogene Bildschicht unmittelbar auf die Außenoberfläche (14) aufdruckbar ist.

## Beschreibung

Die vorliegende Erfindung betrifft eine Strukturplatte, insbesondere eine formstabile Schaumplatte für Werbeanzeigen, nach dem Oberbegriff des Anspruchs 1, sowie eine Extrusionsvorrichtung und ein Verfahren zum Herstellen einer derartigen Strukturplatte.

Bekannte Strukturplatten, insbesondere für Werbeanzeigen im Messebau, Ladenbau, zur Schaufenstergestaltung und/oder für Schilder, können als Sandwich-Verbundelement hergestellt werden, wobei das Verbundelement eine Schaumplatte als Kernschicht mit beidseitigen und vollflächigen Deckschichten, insbesondere aus einem Vollmaterial, aufweist. Zum Beispiel ist unter dem Markennamen Kapa^{®} ein Produkt verfügbar, welches einen Polyurethan Schaumkern aufweist, der mit Papier als Deckschicht versehen ist. Auch sind Produkte verfügbar, die ein geschäumtes Polystyrol als Kern aufweisen und mit einer PVC Deckschicht versehen sind. Dabei weist die Deckschicht eine homogene Oberfläche auf, die für einen Druckprozess und das Aufdrucken einer Bildschicht geeignet ist. Als Deckschicht kommen zum Beispiel Aluminium- oder Kunststoffplatten in Frage, die auch als Folien ausgebildet sein können und mit der Schaumplatte verklebt werden. Auch Kernschichten aus nicht geschäumten Vollmaterial können zum Einsatz kommen. So ist beispielsweise unter der Marke Dibond^{®} ein Produkt verfügbar, das ein Polyethylen (PE) Kern aufweist.

Schaumplatten in solchen Verbundelementen werden im Stand der Technik überwiegend aus dicken Schaumblöcken zugeschnitten und weisen an der Oberfläche offene Poren auf, die ein direktes Bedrucken nicht ermöglichen. Alternativ wäre es möglich, die Oberfläche durch eine aufwändige Nachbearbeitung der Schaumplatte zu veredeln, wobei die Poren an der Oberfläche durch Temperatureinwirkung oder spanende Bearbeitung zumindest teilweise geschlossen werden können.

Eine Herstellung von Schaumkörpern aus thermoplastischen Polyestern kann der CH 700 050 B1 der Anmelderin entnommen werden. Dabei wird ein thermoplastisches Polyester-Ausgangsmaterial beschrieben, das in einem Extrusionsverfahren aufgeschäumt werden kann, insbesondere durch Erhöhung einer Grenzviskosität des Ausgangsmaterials. Zur Herstellung von größeren Schaumkörpern werden zuerst einzelne Schaumstoffstränge extrudiert und anschließend miteinander verschweißt, wie etwa in der EP 1 536 944 A1 offenbart, oder verklebt. Schaumplatten können dann aus dem Schaumkörper herausgetrennt werden. Zur Herstellung von Schaumplattem, insbesondere Strukturplatten, sind also zusätzliche aufwändige Bearbeitungsschritte erforderlich, wobei eine Außenseite der Schaumkörper Schweißnähte oder Klebenähte und eine bearbeitete offenzellige Oberfläche aufweisen kann, die nicht für ein unmittelbares Bedrucken geeignet ist.

Des Weiteren sind Herstellungsverfahren für dünne Schaumbahnen bekannt. So wird in der DE 102 12 729 A1 die Herstellung von Polyethylen Schaumplatten zur Schalldämmung in Gebäuden beschrieben. Zur Herstellung wird ein Polyethylen Kunststoff mit Additiven gemischt und aufgeschmolzen, sowie ein Treibgas unter hohem Druck eingebracht. Eine schäumbare Schmelze wird danach über eine Ringdüse oder ringförmige Düse zu einem Schlauch extrudiert, wobei das Treibgas expandiert und gasgefüllte Poren entstehen. Anschließend wird der extrudierte Schlauch über einen Dorn oder Zylinder gestreckt, aufgeschnitten und zur Ausbildung von Schaumbahnen flachgelegt und aufgewickelt. Dabei entstehen Schaumbahnen mit einer geringen Dichte und einer teilweise offenporigen und stark strukturierten Oberfläche mit großen Toleranzen der Dicke der Schaumbahn. Bezüglich der Extrusion von PET-Schaum durch eine Ringdüse wird auf die WO 99/55513 A1 verwiesen. Auch bei dieser Technologie kommt es zu den Nachteilen der starken Strukturierung der Oberfläche und der ungleichmäßigen Dicke, wenn der extrudierte Schlauch oder Ring zu einer Bahn umgeformt wird.

Insbesondere für Werbeanzeigen ist für ein direktes Bedrucken jedoch eine möglichst homogene Oberfläche erforderlich. Eine Extrusion durch eine Ringdüse in einen Schlauch würde zu einer sehr unregelmäßigen Oberfläche führen und ein direktes Bedrucken der Außenoberfläche der Schaumplatte verhindern.

Besonders nachteilig an dem vorgenannten Schäumverfahren mittels Ringdüsen ist zudem, dass eine herstellbare Dicke begrenzt ist. Insbesondere aufgrund der Schlauchextrusion würde sich bei einer zu dicken Extrusion im anschließenden Abkühl- und Flachlegeprozess erhebliche Eigenspannungen entstehen, die zu einer späteren Verformung der Schaumplatte führen können. Schaumplatten mit einer größeren Dicke können deshalb nurmehr durch Verbinden einzelner Schaumbahnen zu Blöcken und mit anschließendem Zuschneiden hergestellt werden, wobei hier in nachteiliger Weise zusätzliche aufwändige Verfahrensschritte notwendig wären. Eine formstabile Strukturplatte, die sich für den Einsatz als Werbeanzeigen eignet, kann unabhängig von einer nachteiligen Oberflächeneigenschaft auch aufgrund einer fehlenden mechanischen Stabilität nicht durch ein Ringdüsen-Extrusionsverfahren hergestellt werden.

Weiter können anschließend an den Flachlegeprozess thermische oder mechanische Veredelungsschritte zur Erreichung einer homogenen Oberfläche notwendig sein, um eine für einen Druckprozess geeignete Oberfläche herzustellen. Solche Bearbeitungsschritte sind zum Beispiel an einer teilweise aufgeschmolzenen und/oder scharfkantig aufgebrochener Porenstruktur in einer fertig hergestellten Schaumplatte erkennbar, insbesondere auch durch Nachbearbeitungsrückstände.

Der vorliegenden Erfindung liegt die Aufgabe zugrunde die Nachteile im Stand der Technik zu überwinden, insbesondere eine Strukturplatte aus einem Kunststoff vorzuschlagen, die bei Vermeidung der aus dem Stand der Technik bekannten Probleme besonders schnell und in hoher Stückzahl herstellbar ist und dabei eine verbesserte Oberflächenqualität aufweist.

Ferner besteht die Aufgabe darin, ein Verfahren zum Herstellen einer solchen Strukturplatte anzugeben.

Diese Aufgabe wird hinsichtlich der Strukturplatte mit den Merkmalen des unabhängigen Anspruchs 1, hinsichtlich der Extrusionsvorrichtung mit den Merkmalen des Anspruchs 9 und hinsichtlich des Verfahrens mit den Merkmalen des Anspruchs 11 gelöst. Vorteilhafte Ausführungsformen sind Gegenstand der Unteransprüche.

Auch zur Vermeidung von Wiederholungen sollen alle nachfolgend vorrichtungsmäßig offenbarten Merkmale auch als entsprechend verfahrensmäßig offenbart und beanspruchbar gelten, und umgekehrt.

Erfindungsgemäß wird eine Strukturplatte, insbesondere eine formstabile Schaumplatte für bedruckte Werbeanzeigen, Schilder und/oder als Verkleidungsplatte, beansprucht, die aus einem thermoplastischen Kunststoff, insbesondere aus thermoplastischen Polyestern, vorzugsweise Polyethylenterephthalat (PET) gebildet ist. Dabei ist die Strukturplatte unmittelbar durch Extrusion eines Kunststoffs als Ausgangsmaterials durch eine Extrusionsdüse, insbesondere eine Breitschlitzdüse, und ein anschließendes Aufschäumen geformt, wobei die unmittelbar extrudierte Strukturplatte in einer Außenoberfläche zumindest einer Flächenseite derart zumindest teilweise geschlossene Poren und/oder eine derart geringe Porentiefe aufweist, dass eine homogene Bildschicht unmittelbar auf die Außenoberfläche druckbar ist.

Als Extrusionsdüse wird ein Extrusionswerkzeug, insbesondere eine Breitschlitzdüse, verstanden, das eine Form, insbesondere eine Breite senkrecht zu einer Extrusionsachse, der hergestellten Strukturplatte vor einem Aufschäumen vorgibt. Die durch die Extrusionsdüse extrudierte Schaumplatte verändert also anschließend an die Extrusion und einem Aufschäumen im Wesentlichen nicht ihre Form oder Querschnittsdimensionen, zum Beispiel durch weitere Bearbeitungsschritte wie ein Flachlegen, Verschweißen oder eine spanende Bearbeitung.

Dabei hat die Erfindung erstaunlicherweise erkannt, dass eine Strukturplatte mit einer ausreichenden Formstabilität, insbesondere als eine Platte für Werbeanzeigen, unmittelbar und ohne zusätzliche Bearbeitungsschritte extrudiert werden kann. Mit anderen Worten ist die Strukturplatte, insbesondere im Gegensatz zur Herstellung mittels Ringdüsen, ohne wesentliches Verstrecken, Flachlegen, Verschweißen und/oder zusätzliche Nachbearbeitungsschritte herstellbar. Des Weiteren kann die Strukturplatte im Vergleich zu Schaumbahnen eine größere Dicke und Formstabilität aufweisen, insbesondere ohne Verkrümmungen, die aufgrund von Eigenspannung im Rahmen eines Flachlegeprozesses entstehen können.

Die Erfindung hat außerdem erkannt, dass durch die unmittelbare Extrusion der Strukturplatte keine Nachbearbeitung oder Oberflächenveredelung notwendig ist, um anschließend die Schaumplatte bedrucken zu können. Dass die Schaumplatte nicht nachbearbeitet wurde, kann insbesondere daran erkannt werden, dass Poren nicht thermisch aufgeschmolzen sind und/oder eine thermisch verdichtete Oberfläche aufweisen. Des Weiteren sind die Poren vorzugsweise nicht scharfkantig und/oder eingerissen und/oder weisen Bearbeitungsrückstände auf. Auch eine mechanische, insbesondere spanende oder schleifende Bearbeitung, kann teilweise zu einer thermischen Verformung der Oberfläche einer Schaumplatte führen. Außerdem weist die Strukturplatte bevorzugt keine Schweißnähte auf. Auch weist die Struktur- oder Schaumplatte bevorzugt keine verklebte Deckschicht, zum Beispiel eine Folie, oder eine Spachtelschicht auf, die die Poren mit Material überdecken und/oder ausfüllen würden.

Vorzugsweise ist die Schaumplatte im extrudierten Zustand vollständig ausgeschäumt und weist keine Reste von chemischen Treibmitteln, wie sie bei der Herstellung von geschäumten PVC-Platten verwendet werden, innerhalb der Poren auf. Diese Treibmittelreste stehen in dem Verdacht ein hohes Gesundheitsrisiko darzustellen. Daher ist es besonders vorteilhaft, dass die erfindungsgemäße Strukturplatte derartige Reste nicht umfasst oder einschließt. Mit anderen Worten handelt es sich bei der erfindungsgemäßen Strukturplatte vorzugsweise um ein direktes, unmittelbares und abgeschlossen hergestelltes Erzeugnis eines Extrusionsprozesses.

Die Struktur- oder Schaumplatte ist aus einem thermoplastischen Kunststoff ausgebildet, wobei eine PET (Polyethylenterephthalat) Schaumplatte bevorzugt wird, die eine hohe Oberflächen-Homogenität und eine niedrige Oberflächen-Rauigkeit aufweist, um ein unmittelbares Bedrucken der Schaumplatte zu verbessern. Zudem ist PET vorteilhafterweise recyclierbar und weist verbesserte Rauchgas- und Feuersicherheits-Eigenschaften auf. Weiter ist PET auch aus Kostengründen zu bevorzugen. Außerdem hat sich in überraschender Weise gezeigt, dass PET Strukturplatten gemäß der vorliegenden Erfindung einen einzigartigen bisher unbekannten optischen Gesamteindruck beim Bedrucken erzeugen, der von der Bildqualität mit bekannten kommerziellen Plattenprodukten vergleichbar ist, vom Erscheinungsbild aber mit keinem anderen Material vergleichbar ist.

Ein bevorzugter thermoplastischer Kunststoff als Ausgangsmaterial kann der CH 700 050 B1 der Anmelderin entnommen werden, wobei auf die entsprechende Offenbarung vollumfänglich Bezug genommen wird und die offenbarten Merkmale des darin aufgeführten thermoplastischen Kunststoffs als Ausgangsmaterial zur Erfindung im Rahmen einer Weiterbildung hiermit in ihrer Gänze in die Anmeldung miteinbezogen werden.

Bevorzugt ist die Strukturplatte aus thermoplastischen Polyestern mit hohem Molekulargewicht und entsprechender Grenzviskosität ausgebildet, was durch Zusatz eines Modifizierungsmittels während des Extrusionsprozesses erreicht werden kann. Hierzu eignen sich besonders Dianhydride von Tetracarbonsäuren. Strukturplatten mit hoher Homogenität, geringer Offenzelligkeit und hoher Schubbruchdehnung werden erhalten, wenn das Dianhydrid einer Tetracarbonsäure als Konzentrat in einem thermoplastischen Copolyester-Elastomer als Trägermaterial zudosiert ist/wird. Ganz besonders bevorzugt sind Konzentrate mit 10 - 20 Gew.-% Dianhydrid im thermoplastischen Copolyester-Elastomer, die in Mengen von 1.0 bis 2.0 Gew.-%, bezogen auf das Gewicht des Schaumkörpers, zudosiert werden.

Besonders bevorzugt weist der Kunststoff eine Viskositätszahl nach DIN EN ISO1628-5:2015 zwischen 105 und 135 ml/g auf, um Strukturplatte mit einer besonders homogenen Oberflächenstruktur zu extrudieren. Die Viskositätszahl wird bevorzugt durch Zugabe einer definierten Menge an Modifizierungsmittel erhalten. Gemessen wird die Viskositätszahl üblicherweise an einer Probe der fertigen Platte.

Weiter ist bevorzugt vorgesehen, dass die Strukturplatte in der Außenoberfläche eine Oberflächenrauigkeit mit einem Ra-Wert von weniger als 12µm, bevorzugt weniger 10µm, besonders bevorzugt weniger als 8µm, aufweist. Insbesondere eine derartige Oberflächenrauigkeit lässt eine Außenoberfläche visuell als homogen erscheinen, wobei insbesondere eine bedruckte Strukturplatte eine homogene Bildfläche ausbildet.

Die Strukturplatte weist bevorzugt eine Dichte zwischen 200kg/m3 und 500kg/m3, vorzugsweise zwischen 280kg/m3 und 350 kg/m3, besonders bevorzugt vorzugsweise zwischen 290kg/m3 und 330 kg/m3 auf.

In einer bevorzugten Ausführungsform kann die Strukturplatte entlang einer Dicke von einer Mittelebene der Strukturplatte bis hin zu den Außenoberflächen der Strukturplatte eine zunehmende Dichte und/oder eine abnehmende Porengröße aufweisen. So kann vorteilhafterweise eine Strukturplatte mit einem geringen Gewicht und gleichzeitig einer geschlossenzelligen Oberfläche erreicht werden. Wobei durch die höhere Dichte in den Außenoberflächen, insbesondere einer Außenschicht, weiterhin eine hohe Biegesteifigkeit der Strukturplatte bereitgestellt werden kann.

Besonders bevorzugt kann die Strukturplatte einen über die Dicke der Strukturplatte gemittelten mittleren Porenradius von kleiner 250µm aufweisen. Vorzugsweise ist der mittlere Porenradius in einer Außenschicht von 10% der Gesamtdicke der Strukturplatte kleiner als 150µm. Dadurch kann eine gute Bedruckbarkeit sichergestellt werden.

Alternativ oder zusätzlich wäre es denkbar, dass die Außenschicht mittels eines Koextrusionsverfahrens und zumindest einer zweiten Extrusionsdüse ausgebildet ist. Eine unmittelbare Extrusion durch eine einzelne Extrusionsdüse wird jedoch im Rahmen der Erfindung bevorzugt.

Die Strukturplatte ist bevorzugt mittels einer Breitschlitzdüse als formgebende Extrusionsdüse, insbesondere ohne Schweißnähte, hergestellt, wobei eine Breite der extrudierten Strukturplatte senkrecht zu einer Extrusionsachse zumindest einem Vielfachen einer Dicke, insbesondere zumindest einem 60-fachen bis 700-fachen, entspricht. Insbesondere durch die Breitschlitzdüse erhält die Strukturplatte ihre plattenförmige Form und kann durch Aufschäumen eine formstabile Platte ausbilden.

Insbesondere im Gegensatz zu kreisförmigen oder runden Extrusionsdüsen ist die Strukturplatte vorteilhafterweise unmittelbar durch eine Breitschlitzdüse extrudier- und formbar, insbesondere ohne Klebe-/Schweißfügeschritte oder andere Nachbearbeitungen.

Bevorzugt beträgt die Breite der Strukturplatte, insbesondere ohne Schweißnähte, zwischen 1m und 3m, vorzugsweise zwischen 1.20m und 2.10m, und/oder eine Länge entlang der Extrusionsachse zwischen 2.00m und 3.50m.

Weiter bevorzugt beträgt die Dicke der extrudierten Strukturplatte zumindest 3mm, bevorzugt eine Dicke zwischen 3mm und 20mm, besonders bevorzugt eine Dicke zwischen 5mm und 13mm. Bevorzugt kann dadurch eine ausreichende Formstabilität der Strukturplatte gewährleistet werden, insbesondere für den Einsatz als Werbeanzeigen.

Insbesondere weist die Strukturplatte keine Schweißnähte auf, zum Beispiel, um aus mehreren Schaumbahnen die angegebene Breite und/oder Dicke zu erreichen. Insbesondere eine solche Breite der Strukturplatte kann nicht direkt mittels einer Ringdüse hergestellt werden. Es wäre vielmehr ein Zusammensetzen und Verschweißen mehrerer dünner Schaumbahnen notwendig.

Besonders bevorzugt beträgt ein Verhältnis der Dicke der aufgeschäumten Strukturplatte zu einem Spaltabstand der Extrusionsdüse entlang einer Höhenrichtung zwischen 5:1 und 20:1. Vorzugsweise ist die Strukturplatte außerhalb einer Extrusionsvorrichtung aufschäumbar, insbesondere nach einem Austritt aus einer Extrusionsdüse, um eine Scherung an Innenwänden der Extrusionsvorrichtung zu vermeiden, die zu einer inhomogenen Außenoberfläche führen können.

In einer weiteren bevorzugten Ausführungsform weist die Strukturplatte in zumindest einer Flächenseite eine Oberflächenhärte nach Shore D zwischen 30 und 50 vorzugsweise zwischen 35 und 45, auf. So kann ein Verkratzen der Oberfläche vermieden werden.

Bevorzugt ist die Strukturplatte nach der DIN EN 13501 Norm, insbesondere dem SBI-Test, als schwer entflammbar klassifiziert, insbesondere mit der Klasse C-s1,d0 oder B-s1,d0. PET Strukturplatten weisen vorzugsweise schwer entflammbare Eigenschaften auf.

Bei der Bezeichnung der Klassen steht S für eine Rauchgasdichte, B für einen sehr begrenzten Beitrag zum Brand, C für einen begrenzten Beitrag zum Brand, s1 für keine oder eine geringe Rauchentwicklung und d0 für kein brennendes Abtropfen oder Abfallen innerhalb von 600s.

Ganz besonders bevorzugt weist die Strukturplatte keine Ausgleichsschicht, insbesondere keine Folie, als Außenschicht auf und ist somit monolithisch ausgebildet. Die Außenoberfläche der zumindest einen Flächenseite der Strukturplatte ist unmittelbar mit einer Bildschicht bedruckt oder bedruckbar.

Vorteilhafterweise ist die Strukturplatte mittels eines Inkjet-, Siebdruck- und/oder Tampondruckverfahrens unmittelbar bedruckt oder bedruckbar. Weiter vorteilhaft kann die Bildschicht mehrschichtig ausgebildet sein.

Besonders bevorzugt sind die Poren teilweise durch die Bildschicht ausgefüllt. Insbesondere weist die Strukturplatte keine Ausgleichsschicht oder Füllerschicht auf, die als eine Folie und/oder eine porenausfüllende Schicht ausgebildet ist, zum Beispiel eine Spachtelschicht mit hoher Viskosität, welche Poren vollständig ausfüllen. Bevorzugt weist die Strukturplatte eine Farbhaftung gemäß Gitterschnittprüfung nach ISO 2409 mit einem Gitterschnittkennwert 1 oder geringer auf.

Die Erfindung betrifft ebenfalls eine Extrusionsvorrichtung mit entlang einer Extrusionsachse geöffneten Extrusionsdüse, insbesondere eine Breitschlitzdüse, zur Herstellung der vorgenannten Strukturplatte, wobei die Extrusionsvorrichtung angrenzend an eine Auslassöffnung der Extrusionsdüse Fördermittel, insbesondere zwei Walzenkörper, aufweist, die entlang einer Breitenrichtung der Extrusionsdüse angeordnet sind und ein aufgeschäumtes Schaummaterial entlang der Extrusionsachse abziehen, wobei ein Abstand der Fördermittel entlang einer Höhenrichtung größer als ein Spaltabstand der Auslassöffnung der Extrusionsdüse ist.

Vorzugsweise weist die Extrusionsvorrichtung eine Tandem-Extrudiereinheit mit zwei in Serie geschalteten Extrudern auf. Der erste Extruder, der als Ein- oder Zweiwellenextruder ausgebildet sein kann, dient vorzugsweise zum Mischen. Der erste Extruder kann vorzugsweise Treibmitteleinkopplungsstellen aufweisen, über die an einer Stelle mit ausreichendem Innendruck im Extruder Treibmittel zugegeben werden. Der zweite Extruder kann vorzugsweise zum Kühlen und Homogenisieren der Schmelze verwendet werden. Bevorzugt kann der zweite Extruder als Einschneckenextruder ausgebildet sein.

Besonders bevorzugt weist die Extrusionsdüse Heizmittel auf, um den Kusntstoff zu extrudieren.

Die Fördermittel weisen bevorzugt Kühlmittel auf, um das aufgeschäumte Schaummaterial anschließend an die Auslassöffnung der Extrusionsdüse abzukühlen und zu kristallisieren. Insbesondere ein definiertes Abführen des aufgeschäumten Materials kann eine ungewünschte Korrugation oder Welligkeit der Strukturplatte verhindern.

Besonders bevorzugt ist die Extrusionsdüse als eine Breitschlitzdüse ausgebildet, die Verstellmittel zur Einstellung eines Spaltabstands der Auslassöffnung und/oder eines Abstands der Fördermittel aufweist, wobei der Abstand der Fördermittel ein Verhältnis zu dem Spaltabstand aufweist, der abhängig von der zu extrudierenden Dicke der Strukturplatte eingestellt ist/wird. Insbesondere kann so entsprechend der Höhe der Auslassöffnung und/oder des Abstands der Fördermittel auch die Höhe der extrudierten Strukturplatte angepasst werden, insbesondere schnell und flexibel angepasst werden.

Weiter bevorzugt weist die Extrusionsvorrichtung eine weitere Förderanlage und/oder eine Schneidevorrichtung auf, um eine geformte Strukturplatte abzuführen und/oder in Längenabschnitte senkrecht zu der Extrusionsachse zuzuschneiden.

Die Erfindung umfasst auch ein Verfahren zur Extrusion einer Strukturplatte, insbesondere eine zuvor genannte Strukturplatte. Das Verfahren beinhaltet die folgenden Schritte in einer bevorzugten Reihenfolge, wobei eine Abweichung von der Reihenfolge vorzugsweise in beliebiger Weise möglich ist.

In einem ersten Verfahrensschritt erfolgt das Aufschmelzen des thermoplastischen Kunststoffs als Ausgangsmaterials, bevorzugt PET. In einem weiteren Verfahrensschritt findet das Mischen des aufgeschmolzenen Kunststoffs oder Schmelze mit Additiven statt, bevorzugt ein Mischen mit Schmelzefestigkeits-Erhöher, Nukleierungsmittel, Farbmasterbatches, Rezyklat und/oder Flammschutz. In einem weiteren Verfahrensschritt wird die Injektion eines gasförmigen und/oder flüssigen Treibmittels unter Druck in die in den vorangehenden Verfahrensschritten hergestellte Schmelze vorgenommen. In einem weiteren vorteilhaften Verfahrensschritt kann das Kühlen der mit Treibmittel beladenen Schmelze auf optimale Schäumtemperatur erfolgen. In einem weiteren Verfahrensschritt findet das Extrudieren aus der Auslassöffnung einer Extrusionsdüse, insbesondere einer Breitschlitzdüse statt. In einem weiteren Schritt wird der Kunststoff in ein plattenförmiges Schaummaterial aufgeschäumt und die Strukturplatte durch Extrusion entlang der Extrusionsachse kontinuierlich ausgebildet.

Vorzugsweise wird der Kunststoff als Ausgangsmaterial mittels einer Extrusionseinheit, insbesondere einem Schneckenextruder, durch die Extrusionsdüse extrudiert.

Weiter bevorzugt wird das aufgeschäumte Schaummaterial angrenzend an die Auslassöffnung der Extrusionsdüse durch Fördermittel, insbesondere zwei Walzenkörper abgeführt, um eine Korrugationsbildung oder Welligkeit der extrudierten Strukturplatte zu vermeiden.

Das Schaummaterial wird vorzugsweise nach einem Austritt aus der Extrusionsdüse an der Umgebungsluft abgekühlt. Vorzugsweise wird das Schaummaterial von den Fördermitteln gekühlt, um das extrudierte Schaummaterial zusätzlich und beschleunigt auf eine Temperatur unterhalb der Kristallistationstemperatur des Schaummaterials abzukühlen. Dadurch wird vorzugsweise ein Schaummaterial aus der Extrusionsdüse heraus extrudiert, das nicht weiter aufschäumt und/oder sich aufweitet.

Vorzugsweise wird das der Kunststoff unter erhöhtem Druck durch eine Extrusionsdüse getrieben, um eine Schaumbildung innerhalb der Extrusionsvorrichtung zu verhindern, wobei die Strukturplatte anschließend an eine Extrusion des Kunststoffs durch die Auslassöffnung der Extrusionsdüse aufgeschäumt wird.

Bevorzugt wird der Kunststoff als Ausgangsmaterial nach einem Austritt aus der Extrusionsdüse aufgeschäumt. Vorzugsweise findet also keine Vorschäumung innerhalb der Extrusionsdüse statt. Die Vermeidung einer Vorschäumung hat den Vorteil, dass ein Einwirken von Scherkräften in einem Kontaktbereich zu den Düsenwänden auf geschäumtes Material verhindert werden kann, die zu einer inhomogene Oberflächen- und Zellstruktur des aufgeschäumten Schaummaterials führen können.

Die Vorschäumung innerhalb der Extrusionsdüse kann insbesondere durch einen erhöhten Druck, vorzugsweise mehr als 25bar, verhindert werden. Besonders bevorzugt wird ein Kunststoff mit einer Viskositätszahl nach DIN EN ISO1628-5:2015 zwischen 105 und 135 ml/g verwendet.

Bevorzugt wird zum Aufschäumen des Kunststoffs ein physikalisches Treibmittel, bevorzugt ein gasförmiges Treibmittel, besonders bevorzugt Stickstoff und/oder Kohlenstoffdioxid verwendet werden, wobei das Treibmittel in einer Konzentration von 0.05 bis 0.50 Gew.% bezogen auf den Kunststoff als das Ausgangsmaterial verwendet wird.

Ganz besonders bevorzugt wird ein gasförmiges Treibmittel aus Stickstoff und Kohlenstoffdioxid eingesetzt. Durch die Kombination dieser gasförmigen Treibmittel kann vorteilhafterweise eine geringe Dichte der Strukturplatte mit einer gleichzeitig gut bedruckbaren Oberflächenstruktur eingestellt werden.

Weiter bevorzugt werden zur Verteilung des Treibmittels Additive als kleine Partikel, insbesondere Talkum, Titandioxid und/oder Calciumcarbonat zugegeben, die als Keimbildner für Gasbläschen in dem Schaummaterial wirken. Solche Keimbildner oder Nukleierungsmittel können vorteilhafterweise zu einer feineren oder besonders gut mit Farbe und/oder Lack bedruckbaren Schaumoberfläche führen.

In einem bevorzugten weiteren Verfahrensschritt zur Herstellung der Strukturplatte wird die extrudierte Strukturplatte bedruckt, wobei eine homogene Bildschicht unmittelbar, insbesondere ohne Oberflächenveredelung, auf eine Außenoberfläche zumindest einer Flächenseite der Strukturplatte aufgedruckt wird, insbesondere mittels eines Inkjet-, Siebdruck-, Laserdruck- und/oder Tampondruckverfahrens.

Das Verfahren beinhaltet demnach bevorzugt keine weiteren thermischen und/oder mechanischen Oberflächenbearbeitungsschritte und/oder ein Aufbringen von Ausgleichsschichten für die Poren in der Oberfläche der Strukturplatte.

Gegenstand der Erfindung ist auch ein Verfahren zum Bedrucken der extrudierten Strukturplatte nach einem der oben beschriebenen Ausführungsformen, wobei eine homogene Bildschicht unmittelbar, insbesondere ohne Oberflächenveredelung, auf eine Außenoberfläche zumindest einer Flächenseite der Strukturplatte aufgedruckt wird, insbesondere mittels eines Inkjet-, Siebdruck- und/oder Tampondruckverfahrens.

Weitere Vorteile und Einzelheiten der Erfindung ergeben sich aus der nachfolgenden Beschreibung bevorzugter Ausführungsformen der Erfindung sowie anhand von rein schematischen Zeichnungen.

Es zeigen:
- Fig. 1 a:: eine Seitenansicht einer Extrusionsvorrichtung mit extrudierter und geschäumter Strukturplatte,
- Fig. 1b:: eine Draufsicht der Extrusionsvorrichtung gemäß der Fig. 1a,
- Fig. 2:: eine Querschnittsansicht auf eine Austrittsöffnung der Extrusionsvorrichtung gemäß der Fig. 1a.

Gleiche Elemente beziehungsweise Elemente mit gleicher Funktion sind in den Figuren mit den gleichen Bezugsziffern versehen.

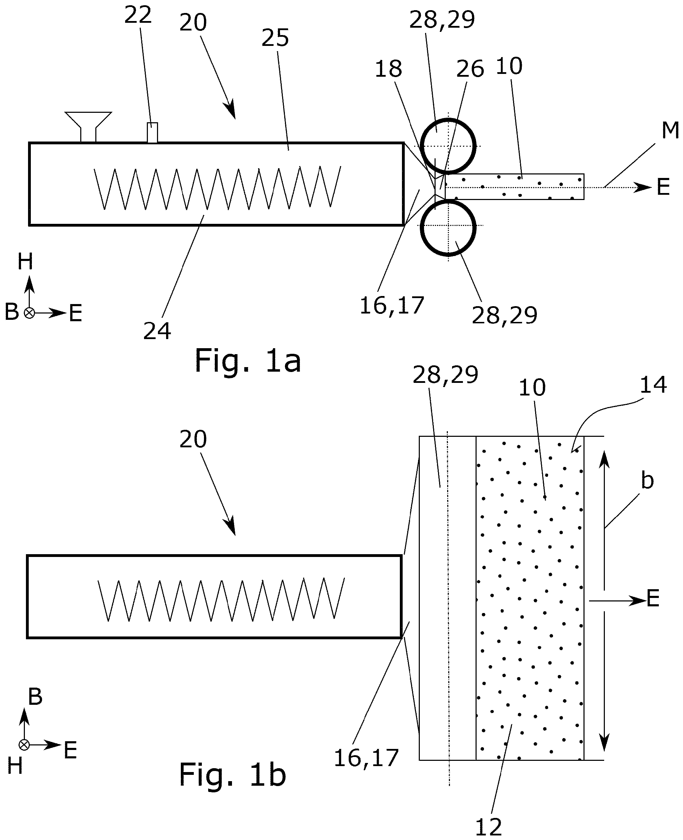

In der Fig. 1a und der Fig. 1b ist eine Extrusionsvorrichtung 20 dargestellt, die vorzugsweise Extrudiereinheit 24 und eine Extrusionsdüse 16, insbesondere eine Breitschlitzdüse 17, aufweist, um eine Strukturplatte 10 aus der Extrusionsdüse 16 heraus und entlang einer Extrusionsachse E zu extrudieren und zu formen. In der schematischen Darstellung der Fig. 1a und 1b ist lediglich eine einzige Extrudiereinheit 24 dargestellt. Es kann jedoch vorteilhaft vorgesehen sein, dass eine Tandem-Extrusionsanalge mit zwei in Serie geschalteten Extrudern vorgesehen ist. Der erste Extruder, der als Ein- oder Zweiwellenextruder ausgebildet sein kann dient vorzugsweise zum Mischen. Der erste Extruder oder die Extrudiereinheit 24 kann vorzugsweise Treibmitteleinkopplungsstellen 22 aufweisen, über die an einer Stelle mit ausreichendem Innendruck im Extruder/Extrudiereinheit 24 die Treibmittel zugegeben werden. Der zweite Extruder kann vorzugsweise zum Kühlen und Homogenisieren der Schmelze verwendet werden. Bevorzugt kann der zweite Extruder als Einschneckenextruder ausgebildet sein.

Die Strukturplatte 10 wird dabei unmittelbar durch Extrusion und Aufschäumen eines Kunststoffs 25 geformt. Bei der unmittelbar aus der Extrusionsvorrichtung 20 heraus geformten Strukturplatte 10 handelt es sich um ein erstarrtes oder abgekühltes Schaummaterial 26, das vorzugsweise vollständig ausgeschäumt ist. Es findet, insbesondere vor einem Bedrucken, keine weitere Vorverarbeitung oder Aufbereitung der Oberflächen der Strukturplatte 10 statt. Nach eine Zwischenlagerung kann ein Entstauben der Oberfläche sinnvoll sein, was aber nicht als Aufbereitung verstanden wird.

Zur Herstellung wird bevorzugt ein thermoplastischer Kunststoff 25, insbesondere PET, welche vorzugsweise zuvor getrocknet wurde, in der Extrudiereinheit 24 mit Treibmitteln versetzt und zusammen mit der Extrudiereinheit 24, an der vorzugsweise nicht dargestellt Heizmittel angeschlossen sind, geschmolzen und der Extrusionsdüse 16 unter erhöhtem Druck zugeführt. Insbesondere durch den erhöhten Druck kann ein Aufschäumen oder Vorschäumen des Kunststoffs 25 innerhalb der Extrusionsdüse 16 verhindert werden.

Besonders bevorzugt weist die Extrusionsvorrichtung 20 angrenzend an eine Auslassöffnung 18 der Extrusionsdüse Fördermittel 28, insbesondere zwei Walzenkörper 29, auf, die sich mit einer Rotationsachse entlang einer Breitenrichtung B der Extrusionsdüse 16 erstrecken und das aufgeschäumte Schaummaterial 26 entlang der Extrusionsachse E abziehen.

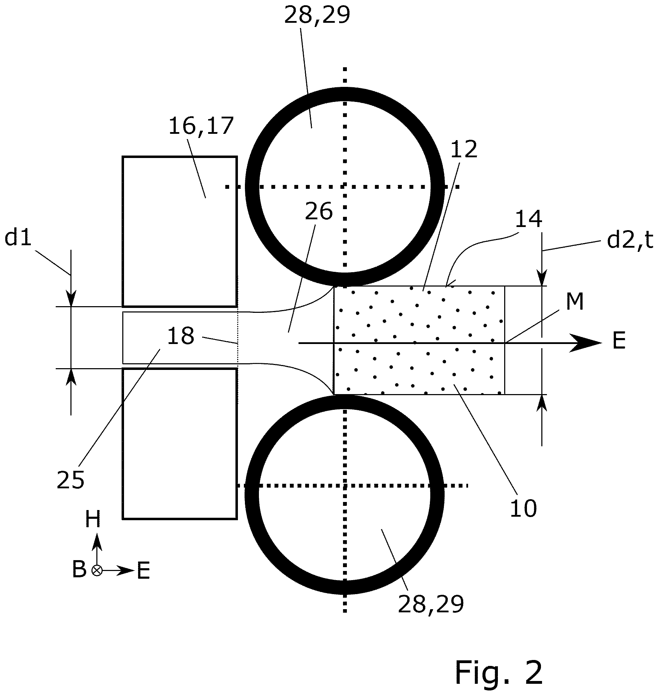

Wie in der Fig. 2 in Detail gezeigt, kann ein Abstand d2 der Fördermittel 28 entlang einer Höhenrichtung H größer als ein Spaltabstand d1 der Auslassöffnung 18 der Extrusionsdüse 16 sein.

Vorzugsweise unmittelbar nach der Austrittsöffnung 18 der Extrusionsdüse 16 wird der Kunststoff 25 in ein Schaummaterial 26 aufgeschäumt, das durch Extrusion die Strukturplatte 10 ausbildet. Insbesondere durch die Fördermittel 28 kann das Schaummaterial 26 abgekühlt und unter eine Kristallisationstemperatur des Schaummaterials 26 abgekühlt werden. Durch weitere Extrusion des abgekühlten Schaummaterials 26 wird dann unmittelbar die Strukturplatte 10 geformt.

Insbesondere dadurch, dass das Schaummaterial 26 unmittelbar in eine plattenförmige Struktur extrudiert wird, weist die Strukturplatte 10 eine Außenoberfläche 14 und Dickenverteilung auf, die gleichmäßig und eben genug sind, um eine homogenen Bildschicht unmittelbar auf die Außenoberfläche 14 der extrudierten Strukturplatte 10 aufzudrucken.

In der Fig. 2 ist weiter dargestellt, wie durch Aufschäumen in eine Höhenrichtung H eine besonders dicke und formstabile Strukturplatte 10 herstellbar ist. Ein Verhältnis der Dicke t der Strukturplatte 10 zu einem Spaltabstand d2 der Extrusionsdüse 16 beträgt vorzugsweise zwischen 5:1 und 20:1.

Die Strukturplatte 10 weist vorzugsweise eine Dicke t größer als 3mm auf. Insbesondere eine solche Dicke t ermöglicht eine ausreichend hohe strukturelle Stabilität der Strukturplatte 10 für den Einsatz als eine Strukturplatte für Werbeanzeigen.

Wie in der Fig. 1b dargestellt ist, beträgt eine Breite b der Strukturplatte 10 entlang einer Breitenrichtung B vorzugsweise zwischen 1m und 3m, vorzugsweise zwischen 1.20m und 2.10m. So kann also eine ausreichend große Strukturplatte 10 - etwa auch für großformatige Werbeanzeigen - vorteilhafterweise unmittelbar und ohne Weiterbearbeitungsschritte hergestellt werden.

In einer bevorzugten Ausführungsform weist die Strukturplatte 10 entlang der Dicke t von einer Mittelebene M der Strukturplatte 10 bis hin zu den Außenoberflächen 14 der Strukturplatte 10 eine zunehmende Dichte und/oder eine abnehmende Porengröße auf, um eine Strukturplatte 10 mit einem geringen Gewicht, einer hohen Biegesteifigkeit und gleichzeitig einer homogenen Außenoberfläche 14 auszubilden.

### Bezugszeichenliste

- 10: Strukturplatte
- 12: Flächenseite der Strukturplatte
- 14: Außenoberfläche der Strukturplatte
- 16: Extrusionsdüse
- 17: Breitschlitzdüse
- 18: Auslassöffnung der Extrusionsdüse
- 20: Extrusionswerkzeug
- 22: Treibmitteleinkopplungsstellen
- 24: Extrudiereinheit
- 25: Kunststoff
- 26: Schaummaterial
- 28: Fördermittel
- 29: Walzenkörper

- t: Dicke der Strukturplatte
- b: Breite der Strukturplatte
- E: Extrusionsachse
- M: Mittelebene
- B,H: Breiten- und Höhenrichtung der extrudierten Strukturplatte

## Patentansprüche

1. Strukturplatte (10), insbesondere eine formstabile Schaumplatte für bedruckte Werbeanzeigen, die aus einem thermoplastischen Kunststoff (25), insbesondere PET gebildet ist,
**dadurch gekennzeichnet,**
**dass** die Strukturplatte (10) unmittelbar durch Extrusion des Kunststoffs (25) durch eine Extrusionsdüse (16), insbesondere eine Breitschlitzdüse, und ein anschließendes Aufschäumen geformt ist, wobei die unmittelbar extrudierte Strukturplatte (10) in einer Außenoberfläche (14) zumindest einer Flächenseite (12) derart zumindest teilweise geschlossene Poren und/oder eine derart geringe Porentiefe aufweist, dass eine homogene Bildschicht unmittelbar auf die Außenoberfläche (14) aufdruckbar ist.

2. Strukturplatte nach dem Anspruch 1,
**dadurch gekennzeichnet,**
**dass** die Strukturplatte (10) in der Außenoberfläche (14) eine Oberflächenrauigkeit mit einem Ra-Wert von weniger als 12 µm, bevorzugt weniger als 10µm, besonders bevorzugt weniger als 8µm, aufweist.

3. Strukturplatte nach dem Anspruch 1 oder 2,
**dadurch gekennzeichnet,**
**dass** die Strukturplatte (10) eine Dichte zwischen 200kg/m3 und 500 kg/m3, vorzugsweise zwischen 280kg/m3 und 350kg/m3, besonders bevorzugt zwischen 290kg/m3 und 330kg/m3, aufweist.

4. Strukturplatte nach einem der Ansprüche 1 bis 3,
**dadurch gekennzeichnet,**
**dass** die Strukturplatte (10) entlang einer Dicke (t) von einer Mittelebene (M) der Strukturplatte (10) bis hin zu den Außenoberflächen (14) der Strukturplatte (10) eine zunehmende Dichte und/oder eine abnehmende Porengröße aufweist.

5. Strukturplatte nach einem der Ansprüche 1 bis 4,
**dadurch gekennzeichnet,**
**dass** die Strukturplatte (10) mittels einer Breitschlitzdüse (17) als formgebende Extrusionsdüse (16), insbesondere ohne Schweißnähte und/oder Klebenähte, hergestellt ist, wobei eine Breite (b) senkrecht zu einer Extrusionsachse der extrudierten Strukturplatte (10) zumindest einem Vielfachen einer Dicke (t), insbesondere zumindest einem 60-fachen bis 700-fachen, entspricht.

6. Strukturplatte nach einem der Ansprüche 1 bis 5,
**dadurch gekennzeichnet**,
die Dicke (t) der extrudierten Strukturplatte (10) zumindest 3mm beträgt, besonders bevorzugt eine Dicke (t) zwischen 3mm und 20mm, besonders bevorzugt zwischen 5mm und 13mm, aufweist.

7. Strukturplatte nach einem der Ansprüche 1 bis 6,
**dadurch gekennzeichnet,**
**dass** die Strukturplatte (10) nach der DIN EN 13501 Norm, insbesondere dem SBI-Test, als schwer entflammbar klassifiziert ist, insbesondere mit der Klasse C-s1,d0 oder B-s1,d0.

8. Strukturplatte nach einem der Ansprüche 1 bis 7,
**dadurch gekennzeichnet,**
**dass** die Strukturplatte (10) keine Ausgleichsschicht, insbesondere eine Folie, als Außenschicht aufweist und die Außenoberfläche (14) der zumindest einen Flächenseite (12) der Strukturplatte (10) unmittelbar mit der Bildschicht bedruckt ist, insbesondere mit Pigmenten auf der Außenoberfläche (14) und/oder in den Poren in der Außenoberfläche (14).

9. Extrusionsvorrichtung mit entlang einer Extrusionsachse (E) geöffneten Extrusionsdüse (16), insbesondere eine Breitschlitzdüse (17) zur Herstellung der Strukturplatte (10) nach einem der Ansprüche 1 bis 8, wobei die Extrusionsvorrichtung angrenzend an eine Auslassöffnung (18) der Extrusionsdüse (16) Fördermittel (28), insbesondere zwei Walzenkörper (29), aufweist, die entlang einer Breitenrichtung (B) der Extrusionsdüse (16) angeordnet sind, um ein aufgeschäumtes Schaummaterial (26) entlang der Extrusionsachse (E) abzuziehen, wobei ein Abstand (d2) der Fördermittel (28) entlang einer Höhenrichtung (H) größer als ein Spaltabstand (d1) der Auslassöffnung (8) der Extrusionsdüse (16) ist.

10. Extrusionsvorrichtung nach dem Anspruch 9,
**dadurch gekennzeichnet,**
**dass** die Extrusionsdüse (16) als eine Breitschlitzdüse (17) ausgebildet ist, die Verstellmittel zur Einstellung des Spaltabstands (d1) der Auslassöffnung (18) und/oder des Abstands (d2) der Fördermittel (28) aufweist, wobei der Abstand (d2) der Fördermittel (28) und der Spaltabstand (d1) in Abhängigkeit der Dicke der zu extrudierenden Strukturplatte eingestellt ist.

11. Verfahren zur Extrusion einer Strukturplatte (10), insbesondere nach einem der Ansprüche 1 bis 8, mit einer Extrusionsvorrichtung, insbesondere nach den Ansprüchen 1 oder 10, mit den Schritten:
- Aufschmelzen des thermoplastischen Kunststoffs (25),
- Mischen des aufgeschmolzenen Kunststoffs (25) mit Additiven,
- Injektion eines gasförmigen und/oder flüssigen Treibmittels unter Druck in eine hergestellte Schmelze des Kunststoffs (25), insbesondere eines PET,
- Extrudieren der Schmelze entlang einer Extrusionsachse (E) aus einer Auslassöffnung (18) einer Extrusionsdüse (16), insbesondere eine Breitschlitzdüse (17),
- Aufschäumen in ein plattenförmiges Schaummaterial (26) und kontinuierliches Ausbilden der Strukturplatte (10) entlang der Extrusionsachse (E).

12. Verfahren nach Anspruch 11,
**dadurch gekennzeichnet,**
**dass** der Kunststoff (25) vollständig nach einem Austritt aus der Extrusionsdüse (16) aufgeschäumt wird.

13. Verfahren nach dem Anspruch 11 oder 12,
**dadurch gekennzeichnet,**
**dass** zum Aufschäumen ein physikalisches Treibmittel, bevorzugt ein gasförmiges Treibmittel, besonders bevorzugt Stickstoff und/oder Kohlenstoffdioxid verwendet werden, wobei das Treibmittel in einer Konzentration von 0.05 bis 0.50 Gew.% bezogen auf den Kunststoff (25) als das Ausgangsmaterial verwendet wird.
